(19)

**Europäisches Patentamt**
**European Patent Office**
**Office européen des brevets**

(11)  **EP 4 544 299 B1**

(12)  **EUROPEAN PATENT SPECIFICATION**

(45) Date of publication and mention
of the grant of the patent:
**03.09.2025  Bulletin 2025/36**

(21) Application number: **23741691.2**

(22) Date of filing: **12.07.2023**

(51) International Patent Classification (IPC):
***G01N 30/86*** *(2006.01)*      *G01N 30/04* *(2006.01)*

(52) Cooperative Patent Classification (CPC):
**G01N 30/86;** G01N 2030/045

(86) International application number:
**PCT/EP2023/069339**

(87) International publication number:
**WO 2024/013240 (18.01.2024 Gazette 2024/03)**

(54) **A METHOD FOR QUALITY CHECK OF AT LEAST ONE LC-MS MEASUREMENT**

VERFAHREN ZUR QUALITÄTSPRÜFUNG VON MINDESTENS EINER LC-MS-MESSUNG

PROCÉDÉ DE CONTRÔLE DE QUALITÉ D'AU MOINS UNE MESURE LC-MS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **13.07.2022  EP 22184581**

(43) Date of publication of application:
**30.04.2025  Bulletin 2025/18**

(73) Proprietors:
• **Roche Diagnostics GmbH
68305 Mannheim (DE)**
Designated Contracting States:
**DE**
• **F. Hoffmann-La Roche AG
4070 Basel (CH)**
Designated Contracting States:
**AL AT BE BG CH CY CZ DK EE ES FI FR GB GR
HR HU IE IS IT LI LT LU LV MC ME MK MT NL NO
PL PT RO RS SE SI SK SM TR**

(72) Inventors:
• **LAUBENDER, Ruediger
81477 München Süd (DE)**
• **MICHELY, Julian
81477 München Süd (DE)**

(74) Representative: **Altmann Stößel Dick
Patentanwälte PartG mbB
Theodor-Heuss-Anlage 2
68165 Mannheim (DE)**

(56) References cited:
**WO-A1-2021/185727     DE-A1- 102020 200 915
US-A1- 2012 187 284**

## Description

Technical Field

This disclosure relates to a method for quality check of at least one Liquid Chromatography-Mass Spectrometry measurement and a system.

Background art

For quality assurance of an Liquid Chromatography-Mass Spectrometry (LC-MS) assay, usually separate samples are measured with known concentrations of compounds of interest. Usually, quality control (QC) samples are tested with a certain frequency within an analytical run and a calculated result is checked versus an acceptance range. Moreover, each sample is usually spiked with a defined amount of an internal standard (IStd), which allows to monitor its chromatographic parameters such as absolute peak area, retention time, and peak width. Signal monitoring of an IStd in LC-MS assays is a common way for assuring sufficient performance and quality of the measurement and thus, of the obtained result for the sample. This concept is part of several international guidelines for mass spectrometric assays, such as those by the CLSI (Clinical and Laboratory Standards Institute), the EMA (European Medicines Agency), or the GTFCh (German society for toxicological and forensic chemistry). Such techniques are described e.g. in US 9,606,088 B2, US 9,465,911 B2, US 7,451,052 B2, US 2011/0101215 A1 and DE 10 2020 200 915 A1.

The respective IStd parameters should fulfill acceptance requirements of maximal deviations or certain cut-offs values. Variations of the IStd ideally cover variations in the whole assay. Therefore, the IStd can on the one hand be used to normalize an analyte signal of interest which can increase result precision. On the other hand, however, these variations either can lead to high false sample flagging rate in case the parameters are out of an acceptance range or the variations can lead to the need of broad acceptance ranges for the respective IStd parameters. The high sample flagging rate would increase the workload as the respective samples e.g. need to be reviewed by an expert, the broad acceptance ranges would decrease the flagging rate but also the power of the IStd monitoring with risk of overlooking bad measurements. Therefore, alternative or supplementary techniques are desirable to fill mentioned gaps and to avoid frequent manual chromatogram review by an expert for verification.

DE 10 2020 200915 A1 describes a chromatograph device including a control section and a storage section. The storage section stores diagnostic reference based on waveforms WO-W2 or intensities A0-A2 of a standard chromatogram CR of a standard sample being a measurement object. When a measurement chromatogram CR of a standard sample where an amount or a ratio is pre-known is measured, the control section notifies of management information related to the chromatograph device based on diagnostic reference concerning waveforms W0a, W0c-W2c or intensities A0b-A2b of the measurement chromatogram.

Problem to be solved

It is therefore an objective of the present invention to provide a method for quality check of at least one Liquid Chromatography-Mass Spectrometry measurement and a system, which avoid the above-described disadvantages of known methods and devices. In particular, the method and the system shall reduce the need for manual review without reducing the power of the parameter monitoring for quality assurance purposes.

Summary

This problem is addressed by a method for quality check of at least one Liquid Chromatography-Mass Spectrometry measurement and a system with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the present invention, a method for quality check of at least one Liquid Chromatography-Mass Spectrometry (LC-MS) measurement on a sample comprising an analyte of interest and a defined amount of at least one internal standard according to claim 1 is disclosed.

The method comprises the following steps which, as an example, may be performed in the given order. It shall be noted, however, that a different order is also possible. Further, it is also possible to perform one or more of the method steps once or repeatedly. Further, it is possible to perform two or more of the method steps simultaneously or in a timely overlapping fashion. The method may comprise further method steps which are not listed.

The method comprises the following steps

a) determining an information $peakArea_{aqn}$ about an analyte signal and an information $peakArea_{iqn}$ about an internal standard signal of the LC-MS measurement, wherein qn refers to a quantifier;

b) determining at least one monitoring parameter by using the information about the analyte signal and the information about the internal standard signal by using at least one processing device, wherein the monitoring parameter comprises a minimal limit for the internal standard signal for said analyte signal of said sample;

c) comparing the information about the internal standard signal to the monitoring parameter by using the processing device, wherein the LC-MS measurement is flagged by using the processing device as to fulfil the quality check in case the information about the internal standard signal is greater or equal to the monitoring parameter or otherwise as failed.

The method is computer-implemented. The term "computer implemented method" as used herein is a broad term and is to be given its ordinary and customary meaning to a person of ordinary skill in the art and is not to be limited to a special or customized meaning. The term specifically may refer, without limitation, to a method involving at least one computer and/or at least one computer network. The computer and/or computer network may comprise at least one processor which is configured for performing at least one of the method steps of the method according to the present invention. Preferably each of the method steps is performed by the computer and/or computer network. The method may be performed completely automatically, specifically without user interaction. The terms "automatically" and "automated" as used herein are broad terms and are to be given their ordinary and customary meaning to a person of ordinary skill in the art and is not to be limited to a special or customized meaning. The terms specifically may refer, without limitation, to a process which is performed completely by means of at least one computer and/or computer network and/or machine, in particular without manual action and/or interaction with a user.

The LC-MS measurement may be performed by using at least one mass spectrometry device configured for performing at least one LC-MS measurement on a sample comprising an analyte of interest and a defined amount of an internal standard. The term "mass spectrometry" as used herein is a broad term and is to be given its ordinary and customary meaning to a person of ordinary skill in the art and is not to be limited to a special or customized meaning. The term specifically may refer, without limitation, to an analytical technique for determining a mass-to-charge ratio of ions. As used herein, the term "mass spectrometry device", also denoted "mass analyzer", is a broad term and is to be given its ordinary and customary meaning to a person of ordinary skill in the art and is not to be limited to a special or customized meaning. The term specifically may refer, without limitation, to an analyzer configured for detecting at least one analyte based on mass-to-charge ratio.

The mass spectrometry device may be or may comprise at least one quadrupole analyzer. As used herein, the term "quadrupole mass analyzer" is a broad term and is to be given its ordinary and customary meaning to a person of ordinary skill in the art and is not to be limited to a special or customized meaning. The term specifically may refer, without limitation, to a mass analyzer comprising at least one quadrupole as mass filter. The quadrupole mass analyzer may comprise a plurality of quadrupoles. For example, the quadrupole mass analyzer may be a triple quadrupole mass spectrometer. For example, the mass spectrometry device may comprise an ionization source, a skimmer, and three quadrupolar stages Q1, Q2 and Q3 and a detector. Each of the quadrupolar stages Q1, Q2 and Q3 comprising a quadrupole.

As used herein, the term "mass filter" is a broad term and is to be given its ordinary and customary meaning to a person of ordinary skill in the art and is not to be limited to a special or customized meaning. The term specifically may refer, without limitation, to a device configured for selecting ions injected to the mass filter according to their mass-to-charge ratio m/z. The mass filter may comprise two pairs of electrodes. The electrodes may be rod-shaped, in particular cylindrical. In ideal case, the electrodes may be hyperbolic. The electrodes may be designed identical. The electrodes may be arranged in parallel extending along a common axis, e.g. a z axis. The quadrupole mass analyzer may comprise at least one power supply circuitry configured for applying at least one direct current (DC) voltage and at least one alternating current (AC) voltage between the two pairs of electrodes of the mass filter. The power supply circuitry may be configured for holding each opposing electrode pair at identical potential. The power supply circuitry may be configured for changing sign of charge of the electrode pairs periodically such that stable trajectories are only possible for ions within a certain mass-to-charge ratio m/z. Trajectories of ions within the mass filter can be described by the Mathieu differential equations. For measuring ions of different m/z values DC and AC voltage may be changed in time such that ions with different m/z values can be transmitted to a detector of the mass spectrometry device.

The mass spectrometry device may further comprise at least one ionization source. As used herein, the term "ionization source", also denoted as "ion source" or "ionizer", is a broad term and is to be given its ordinary and customary meaning to a person of ordinary skill in the art and is not to be limited to a special or customized meaning. The term specifically may refer, without limitation, to a device configured for generating ions, e.g. from neutral gas molecules. The ionization source may be or may comprise at least one source selected from the group consisting of: at least one gas phase ionization source such as at least one electron impact (EI) source or at least one chemical ionization (CI) source; at least one desorption ionization source such as at least one plasma desorption (PDMS) source, at least one fast atom bombardment (FAB) source, at least one secondary ion mass spectrometry (SIMS) source, at least one laser desorption (LDMS) source, and at least one matrix assisted laser desorption (MALDI) source; at least one spray ionization source such as at least one thermospray (TSP) source, at least one atmospheric pressure chemical ionization (APCI) source, at least one electrospray (ESI), and at least one atmospheric pressure ionization (API) source.

The mass spectrometry device may comprise at least one detector. As used herein, the term "detector", is a broad term and is to be given its ordinary and customary meaning to a person of ordinary skill in the art and is not to be limited to a special or customized meaning. The term specifically may refer, without limitation, to an apparatus configured for detecting incoming ions. The detector may be configured for detecting charged particles. The detector may be or may comprise at least one electron multiplier. The mass spectrometry device, in particular the detector and/or at least one processing device of the mass spectrometry device, may be configured to determining at least one mass spectrum of the detected ions. As used herein, the term "mass spectrum" is a broad term and is to be given its ordinary and customary meaning to a person of ordinary skill in the art and is not to be limited to a special or customized meaning. The term specifically may refer, without limitation, to a two dimensional representation of signal intensity vs the charge-to-mass ratio m/z, wherein the signal intensity corresponds to abundance of the respective ion. The mass spectrum may be a pix-elated image. For determining resulting intensities of pixels of the mass spectrum, signals detected with the detector within a certain m/z range may be integrated. The analyte in the sample may be identified by the processing device. Specifically, the processing device may be configured for correlating known masses to the identified masses or through a characteristic fragmentation pattern.

The LC-MS measurement may be or may comprise at least one measurement by using the mass spectrometry device. The mass spectrometry device may comprise at least one liquid chromatograph, also denoted as liquid chromatography (LC) device. The mass spectrometry device may be a liquid chromatography mass spectrometry device. The liquid chromatograph may be used as sample preparation for the mass spectrometry device. As used herein, the term "liquid chromatography (LC) device" is a broad term and is to be given its ordinary and customary meaning to a person of ordinary skill in the art and is not to be limited to a special or customized meaning. The term specifically may refer, without limitation, to an analytical module configured to separate one or more analytes of interest of a sample from other components of the sample for detection of the one or more analytes with the mass spectrometry device. The LC device may comprise at least one LC column. For example, the LC device may be a single-column LC device or a multi-column LC device having a plurality of LC columns. The LC column may have a stationary phase through which a mobile phase is pumped in order to separate and/or elute and/or transfer the analytes of interest. The liquid chromatography mass spectrometry device may further comprise a sample preparation station for the automated pre-treatment and preparation of samples each comprising at least one analyte of interest. As used herein, the term "liquid chromatography mass spectrometry device" is a broad term and is to be given its ordinary and customary meaning to a person of ordinary skill in the art and is not to be limited to a special or customized meaning. The term specifically may refer, without limitation, to a combination of liquid chromatography with mass spectrometry. The liquid chromatography mass spectrometry device may be or may comprise at least one high performance liquid chromatography (HPLC) device or at least one micro liquid chromatography (μLC) device. The liquid chromatography mass spectrometry device may comprise a liquid chromatography (LC) device and a mass spectrometry (MS) device, in the present case the mass filter, wherein the LC device and the mass filter are coupled via at least one interface. The interface coupling the LC device and the MS device may comprise the ionization source configured for generating of molecular ions and for transferring of the molecular ions into the gas phase. The interface may further comprise at least one ion mobility module arranged between the ionization source and the mass filter. For example, the ion mobility module may be a high-field asymmetric waveform ion mobility spectrometry (FAIMS) module.

The mass spectrometry device may be configured for performing an end-to-end workflow (also denoted as sample measurement workflow) in which a sample is injected into an inlet of the liquid chromatography column, the sample is separated into components on the column, and individual components are eluted from the column. The eluted components are directed into the mass spectrometer where they are ionized and analyzed. The mass spectrometry device may measure ion fragmentation patterns associated with each of the components. Each ion fragmentation pattern consists of one or more peaks corresponding to ion fragments with particular m/z ratios. The pattern of peaks for a particular analyte (e.g., the m/z ratios and intensities of the peaks) effectively function as a "fingerprint" for the analyte. Due to the complex nature of the fragmentation pattern, a wide variety of components can be identified and quantified based on such measurements. Typically, identification is performed by comparing a measured ion fragmentation pattern with reference information (e.g., previously measured or simulated ion fragmentation patterns for known components). Identification of particular components can also be performed based on the time interval between initial introduction of the sample (e.g., injection into the inlet of the LC-MS system) and elution of a component from the LC column, or the time interval between initial introduction of the sample and measurement of a component ion fragmentation pattern in the mass spectrometer. Certain components may migrate through the LC column at particular rates, and the elapsed time interval can be used as an indicator of the component's identity. As with ion fragmentation patterns, the elapsed time interval can be compared with reference information (e.g., previously measured migration and/or measurement times for known components) to determine the component's identity.

As used herein, the term "sample" is a broad term and is to be given its ordinary and customary meaning to a person of ordinary skill in the art and is not to be limited to a special or customized meaning. The term specifically may refer, without limitation, to an arbitrary test sample such as a biological sample. The mass spectrometry device may be configured for measuring a wide variety of biological samples. Examples of such samples include, but are not limited to, physiological fluid, including blood, serum, plasma, urine, sweat, saliva, ocular lens fluid, cerebral spinal fluid, milk, ascites fluid, mucous, synovial fluid, peritoneal fluid, amniotic fluid, lymph fluid, interstitial fluid, cerebrospinal fluid, tissue, cells or the like.

The sample may comprise one or more analytes of interest, also denoted as targeted analyte. The sample may be used directly as obtained from the respective source or may be subject of a pretreatment and/or sample preparation workflow. For example, the sample may be pretreated by adding an internal standard and/or by being diluted with another solution and/or by having being mixed with reagents or the like. For example, analytes of interest may be vitamin D, drugs of abuse, therapeutic drugs, hormones, and metabolites in general. For further details with respect to the sample, reference is made e.g. to EP 3 425 369 A1.

Other analytes of interest are possible.

The term "internal standard" (ISTD), as used herein is a broad term and is to be given its ordinary and customary meaning to a person of ordinary skill in the art and is not to be limited to a special or customized meaning. The term specifically may refer, without limitation, to a known amount of a substance. The internal standard may exhibit similar properties as the analyte of interest when subjected to a workflow using the mass spectrometry device. The workflow may comprise any pre-treatment, enrichment and actual detection step. For example, the internal standard may be an isotopically labeled variant (comprising e.g. 2H, 13C, or 15N etc. label) of the analyte of interest. The method may comprise spiking the sample with the at least one internal standard.

The term "quantifier", also denoted as "quantifier ion" as used herein is a broad term and is to be given its ordinary and customary meaning to a person of ordinary skill in the art and is not to be limited to a special or customized meaning. The term specifically may refer, without limitation, to a transition used for quantification of the analyte. The quantifier may be the most abundant ion. The term "qualifier", also denoted as "qualifier ion" as used herein is a broad term and is to be given its ordinary and customary meaning to a person of ordinary skill in the art and is not to be limited to a special or customized meaning. The term specifically may refer, without limitation, to a further transition which to confirm the measurement. The term "quantifier/qualifier ratio" as used herein is a broad term and is to be given its ordinary and customary meaning to a person of ordinary skill in the art and is not to be limited to a special or customized meaning. The term specifically may refer, without limitation, to an signal intensity ratio or peak area ratio of the quantifier and qualifier.

The term "quality" as used herein is a broad term and is to be given its ordinary and customary meaning to a person of ordinary skill in the art and is not to be limited to a special or customized meaning. The term specifically may refer, without limitation, to a measure for reliability of a measurement result obtained by using the mass spectrometry device. The measurement result may be a quantitative and/or qualitative measurement such as a presence and/or a concentration of the analyte in the sample. The quality may depend on several factors such as measurement conditions, background, interferences, instrument performance, shifts in retention time, peak width, peak height, and peak area.

As used herein, the term "quality check" is a broad term and is to be given its ordinary and customary meaning to a person of ordinary skill in the art and is not to be limited to a special or customized meaning. The term specifically may refer, without limitation, to at least one process of testing, after data acquisition, if at least one pre-defined quality requirement is fulfilled. The quality check may be used for distinguishing trustworthy and untrustworthy measurement results. As used herein, the term "trustworthy" measurement result is a broad term and is to be given its ordinary and customary meaning to a person of ordinary skill in the art and is not to be limited to a special or customized meaning. The term specifically may refer, without limitation, to a measurement result considered as one or more of reliable, acceptable or of "good quality". The trustworthy measurement result may be a measurement result whose corresponding internal standard signal fulfills at least one pre-defined requirement. The trustworthy measurement result may be a measurement result having a precision and/or accuracy within a predefined tolerance range. As used herein, the term "untrustworthy" measurement result is a broad term and is to be given its ordinary and customary meaning to a person of ordinary skill in the art and is not to be limited to a special or customized meaning. The term specifically may refer, without limitation, to a measurement result considered as one or more of non-reliable, non-acceptable or of "bad quality". The untrustworthy measurement result may be a measurement result whose corresponding internal standard signal fails to fulfill at least one pre-defined requirement. The untrustworthy measurement result may be a measurement result having a precision and/or accuracy outside the tolerance range.

For example, the quality check may be performed for each measurement. For example, the quality check may be performed with a predefined frequency such as one or more of after a predefined time span, after new calibration, after column exchange, or after maintainance activities at the instrument.

The term "analyte signal" as used herein is a broad term and is to be given its ordinary and customary meaning to a person of ordinary skill in the art and is not to be limited to a special or customized meaning. The term specifically may refer, without limitation, to a signal of the LC-MS measurement relating to the analyte such as a peak in the chromatogram and/or mass spectrum of the analyte. The term "internal standard signal" as used herein is a broad term and is to be given its ordinary and customary meaning to a person of ordinary skill in the art and is not to be limited to a special or customized meaning. The term specifically may refer, without limitation, to a signal of the LC-MS measurement relating to the internal standard such as a peak in the chromatogram and/or mass spectrum of the internal standard. The information about the analyte signal may at least one of a peak area, a peak height, a peak width, or a retention time. The information about the internal standard signal may be at least one of a peak area, a peak height, a peak width, or a retention time.

The determining of the information about the analyte signal and the information about the internal standard signal may comprise one or more of measuring, obtaining or retrieving measurement data.

For example, the information about the analyte signal and the information about the internal standard signal may be determined by performing at least one LC-MS measurement by using the mass spectrometry device. For example, step a) may comprise performing at least one LC-MS measurement on the sample. In step a) at least one liquid chromatography mass spectrometry device may be used.

For example, the information about the analyte signal and the information about the internal standard signal may be determined by retrieving measurement data via at least one communication interface e.g. of the processing device. The measurement data which is retrieved by the communication interface may be obtained by using a mass spectrometry device and may be transmitted to the processing device. For example, the measurement data may be retrieved by the communication interface from at least one database. For example, the determining may comprise retrieving at least one chromatogram and/or mass spectrum by the processing device, e.g. via its communication interface. The term "communication interface" as used herein is a broad term and is to be given its ordinary and customary meaning to a person of ordinary skill in the art and is not to be limited to a special or customized meaning. The term specifically may refer, without limitation, to an item or element forming a boundary configured for transferring information. In particular, the communication interface may be configured for transferring information from a computational device, e.g. a computer, such as to send or output information, e.g. onto another device. Additionally or alternatively, the communication interface may be configured for transferring information onto a computational device, e.g. onto a computer, such as to receive information. The communication interface may specifically provide means for transferring or exchanging information. In particular, the communication interface may provide a data transfer connection, e.g. Bluetooth, NFC, inductive coupling or the like. As an ex-ample, the communication interface may be or may comprise at least one port comprising one or more of a network or internet port, a USB-port and a disk drive. The communication interface may be at least one web interface.

The term "database" as used herein is a broad term and is to be given its ordinary and customary meaning to a person of ordinary skill in the art and is not to be limited to a special or customized meaning. The term specifically may refer, without limitation, to an organized collection of data, generally stored and accessed electronically from a computer or computer system. The database may comprise or may be comprised by a data storage device. The database may comprise at least one data base management system, comprising a software running on a computer or computer system, the software allowing for interaction with one or more of a user, an application or the database itself, such as in order to capture and analyze the data contained in the database. The database management system may further encompass facilities to administer the database. The database, containing the data, may, thus, be comprised by a data base system which, besides the data, comprises one or more associated applications. The database may be part of the processing device or may be external to the processing device. The processing device and/or the database may be at least partially cloud-based. The term "cloud-based" as used herein is a broad term and is to be given its ordinary and customary meaning to a person of ordinary skill in the art and is not to be limited to a special or customized meaning. The term specifically may refer, without limitation, to an outsourcing of the processing device or of parts of the processing device to at least partially interconnected external devices, specifically computers or computer networks having larger computing power and/or data storage volume. The external devices may be arbitrarily spatially distributed. The external devices may vary over time, specifically on demand. The external devices may be interconnected by using the internet. The external devices may each comprise at least one communication interface.

The determining may further comprise processing the measured or retrieved measurement data for determining the information about the analyte signal and the information about the internal standard signal by using the processing device. For example, the determining may comprise applying at least one peak fit modelling to the chromatogram and/or mass spectrum by using the processing device. The term "processing device" as used herein is a broad term and is to be given its ordinary and customary meaning to a person of ordinary skill in the art and is not to be limited to a special or customized meaning. The term specifically may refer, without limitation, to an arbitrary logic circuitry configured for performing basic operations of a computer or system, and/or, generally, to a device which is configured for performing calculations or logic operations. The processing device may be configured for processing basic instructions that drive the computer or system. As an example, the processing device may comprise at least one arithmetic logic unit (ALU), at least one floating-point unit (FPU), such as a math co-processor or a numeric co-processor, a plurality of registers, specifically registers configured for supplying operands to the ALU and storing results of operations, and a memory, such as an L1 and L2 cache memory. The processing device may be a multicore processor. The processing device may be or may comprise a central processing unit (CPU). Additionally or alternatively, the processing device may be or may comprise a microprocessor, thus specifically the processor's elements may be contained in one single integrated circuitry (IC) chip. Additionally or alternatively, the processing device may be or may comprise one or more application-specific integrated circuits (ASICs) and/or one or more field-programmable gate arrays (FPGAs) and/or one or more tensor processing unit (TPU) and/or one or more Graphics Processing Units (GPU) and/or one or more chip, such as a dedicated machine learning optimized chip, or the like. The processing device may be configured, such as by software programming, for performing one or more evaluation operations. The processing device may be configured for performing the named method step(s). Thus, as an example, the processing device may comprise a software code stored thereon comprising a number of computer instructions. The processing device may provide one or more hardware elements for performing one or more of the indicated operations and/or may provide one or more processors with software running thereon for performing one or more of the method steps.

The term "monitoring parameter" as used herein is a broad term and is to be given its ordinary and customary meaning to a person of ordinary skill in the art and is not to be limited to a special or customized meaning. The term specifically may refer, without limitation, to one or more of a readout parameter, a measurand, or a measurable parameter suitable as a basis for a quality check, e.g. for distinguishing between trustworthy and untrustworthy measurement results. As outlined above, concept for quality checks are known e.g. from several international guidelines for mass spectrometric assays, such as those by the CLSI (Clinical and Laboratory Standards Institute), the EMA (European Medicines Agency), or the GTFCh (German society for toxicological and forensic chemistry). The monitoring parameter according to the present invention may be an advanced monitoring parameter. The monitoring parameter according to the present invention may allow to supplement the known and common parameters, e.g. in cases they lack in reliability due to e.g. high variability. Using said monitoring parameter may allow reducing the need for manual peak review by an expert due to false sample flagging without reducing the power of the parameter monitoring for quality assurance purposes.

The determining of the monitoring parameter comprises using the information about the analyte signal and the information about the internal standard signal by the processing device. The monitoring parameter comprises a minimal limit for the internal standard signal for said analyte signal of said sample. The determining of the monitoring parameter may comprise the processing device calculating a monitoring parameter using the information about the analyte signal and the information about the internal standard signal. The monitoring parameter may be determined by combining a value for a minimum IStd signal limit with a dependency of the measured analyte signal for each sample. The determining of the monitoring parameter may be performed by executing a software algorithm.

Such a monitoring parameter may allow reducing false result flagging (false-positives) and overlooking of bad measurements (false-negatives) to a minimum. The monitoring parameter may be superior compared to a simple absolute minimum IStd signal limit. The rationale may be based on the required precision of an assay and the fact that the precision is dependent on the signal. **In** general, a decrease of the signal usually also leads to a decrease of precision. The analyte signal may be normalized by the IStd signal. Therefore, the final measurement result may dependent on both, analyte and IStd signal. After determining needed parameters on one system, a minimal limit for the IStd signal may be calculated individually for each analyte signal on every other system that is needed to achieve required precision for the assay in a particular sample.

The monitoring parameter is determined by

$$\frac{b^2 \times (peakArea_{aqn})^2}{-a \times b \times (peakArea_{aqn})^2 + \sqrt{-b^2 \times (peakArea_{aqn})^2 \times (b + (a - CV_{psd}) \times peakArea_{aqn}) * (b + (a + CV_{psd}) \times peakArea_{aqn})}},$$

wherein a and b are predetermined parameters, wherein $CV_{psd}$ is a predefined precision acceptance criterion for a coefficient of variation for an assay.

In the following derivation of the monitoring parameter is described:

If the signal ratio of analyte and IStd signal, represented in the following by the area ratio of analyte quantifier (aqn) and IStd quantifier (iqn), is measured, the precision, represented in the following by the CV, may be estimated by equation 1.

$$(eq.1)\ CV_{aqniqn} = \sqrt{\left(CV_{aqn}\right)^2 + \left(CV_{iqn}\right)^2}$$

The correlation of the area values for aqn and iqn may not be known a priori. However, negative correlation is not assumed due to the general need of a certain degree of similarity in e.g. physico-chemical behavior of analyte and IStd (assumption 1). Thus, only positive correlation may be assumed while no correlation represents the worst case (assumption 2). Any positive correlation of the area values for aqn and iqn may lead to decrease of the resulting CV(aqniqn), i.e. getting better, when the area ratio aqn/iqn is calculated. In the following, assumption 1 and 2 is described. If there is a correlation, the respective coefficient may need to be implemented to the equation accordingly. The dependency of the signals and the respective CV for the areas of aqn and iqn can follow one of two function types. Either according to equation 2 for aqn and equation 3 for iqn or according to equation 4 for aqn and equation 5 for iqn.

$$(eq.2)\ CV_{aqn} = a + b \times \frac{1}{peakArea_{aqn}}$$

and

$$(eq.3)\ CV_{iqn} = c + d \times \frac{1}{peakArea_{iqn}}$$

$$(eq.4)\ CV_{aqn} = a + b \times \frac{1}{\sqrt{peakArea_{aqn}}}$$

and

$$(eq.5)\ CV_{iqn} = c + d \times \frac{1}{\sqrt{peakArea_{iqn}}}$$

In the following, equation 2 and 3 is illustrated. Further, the behavior of analyte and internal standard should be highly similar for MS measurements. In these cases, it could also be assumed that *CV(aqn) ≈ CV(iqn),* thus parameter *c = a* and *d = b* (assumption 3). In the following, assumption 3 is illustrated. The combination of equation 1 with equation 2 and 3 leads to equation 6 given by

$$(eq.6)\ CV_{aqniqn} = \sqrt{\left(a + b \times \frac{1}{peakArea_{aqn}}\right)^2 + \left(a + b \times \frac{1}{peakArea_{iqn}}\right)^2}$$

The precision acceptance criterion for an assay is given by CV(assay). The actual precision of the result CV(result) need to fulfill this criterion according to equation 7.

$$(eq.7)\ CV_{assay} \geq CV_{result}$$

The main part of imprecision is based on the signals themselves, that is CV(aqniqn), and not on the calibration which transfers the signals to concentrations and thus, to the result. Therefore, in the following it is assumed that *CV(result) ≈ CV(aqniqn)* (assumption 4). That leads from equation 7 to equation 8. The combination of equation 6 with equation 8 lead

to equation 9.

$$(eq.8)\ CV_{assay} \geq CV_{aqniqn}$$

$$(eq.9)\ CV_{assay} \geq \sqrt{\left(a + b \times \frac{1}{peakArea_{aqn}}\right)^2 + \left(a + b \times \frac{1}{peakArea_{iqn}}\right)^2}$$

Solving the equation 9 for peakArea(iqn) leads to the following equation 10 and the monitoring parameter.

$$(eq.10)\ peakArea_{iqn} \geq \frac{b^2 \times (peakArea_{aqn})^2}{-a \times b \times (peakArea_{aqn})^2 + \sqrt{-b^2 \times (peakArea_{aqn})^2 \times (b + (a - CV_{psd}) \times peakArea_{aqn}) * (b + (a + CV_{psd}) \times peakArea_{aqn})}}$$

Equation 10 may represent the basis for the minimal limit for the IStd signal needed for a measured analyte signal to achieve a required precision of the measurement result. This calculation may be based on the assumption that the precision of the measurement result mainly depends on the measured signal despite its root cause. That means that it would not matter whether a signal loss was due to e.g. a lower concentrated sample or due to lower MS performance (assumption 5). Additional factors in MS performance loss, such as background increase or noise increase may also lead to effects for the measurement result, as well.

The method may comprise considering discontinuities for the monitoring parameter using at least one checking rule. It is assumed that a > 0, b > 0, peakArea(aqn) > 0, and CV(assay) > 0 hold. The checking rule may use a plurality of criteria, wherein the criteria are

i.

$$-a \times b \times (peakArea_{aqn})^2 + \sqrt{-b^2 \times (peakArea_{aqn})^2 \times (b + (a - CV_{psd}) \times peakArea_{aqn}) \times (b + (a + CV_{psd}) \times peakArea_{aqn})} \leq 0;$$

ii.

$$peakArea_{aqn} \leq \frac{b}{\sqrt{(CV_{psd})^2 - a^2 - a}};$$

iii.

$$\frac{CV_{psd}}{\sqrt{2}} > a;$$

iv.

$$-b^2 \times (peakArea_{aqn})^2 \times (b + (a - CV_{psd}) \times peakArea_{aqn}) \times (b + (a + CV_{psd}) \times peakArea_{aqn}) < 0;$$

v.

$$peakArea_{iqn} = +\infty;$$

wherein the checking rule comprises

- determining if equation iv is true, then equation v is used as monitoring parameter, else
- determining if equation ii and iii are both true, then equation v is used as monitoring parameter, else
- determining if equation i is true, then equation v is used as monitoring parameter, else
- using the monitoring parameter of equation 10 as monitoring parameter.

Equation i may allow for checking for the denominator of equation 10 leading to negative peakArea(iqn) values. Equations ii and iii may allow for checking for peakArea(iqn) values below the discontinuity in the peakArea(aqn). Equation iv may allow for checking for negative root in the denominator.

The parameters a and b may be determined by performing a plurality of LC-MS measurements on the sample. For each measurement the information about the analyte signal may be determined. The method may comprise, by using the processing device, determining a median or mean of the information about the analyte signal and its CV(aqn), and calculating the parameters a and b by using at least one regression fit according to

$$CV_{aqn} = a + b \times \frac{1}{peakArea_{aqn}} \text{ or } CV_{aqn} = a + b \times \frac{1}{\sqrt{peakArea_{aqn}}}.$$

The method comprises comparing the information about the internal standard signal to the monitoring parameter by using the processing device. The comparison may comprise at least one mathematical operation. The comparison may comprise determining a deviation between the information about the internal standard signal to the monitoring parameter. The LC-MS measurement is flagged by using the processing device as to fulfil the quality check in case the information about the internal standard signal is greater or equal to the monitoring parameter or otherwise, i.e. in case the information about the internal standard signal is lower than the monitoring parameter, as failed. The comparison may comprise considering a pre-defined tolerance range. The predefined tolerance range may be a deviation of $\pm$ 20%, preferably $\pm$ 15%, more preferably $\pm$ 10% from the monitoring parameter. The predefined tolerance range may be fixed or may be adjustable, e.g. by a user. The comparison may be performed by executing a software algorithm.

The method may further comprise providing an outcome of the quality check, e.g. if the measurement result is flagged or not. The providing may comprise displaying the outcome to a user. The displaying may be performed by using at least one user interface. The term "user interface" as used herein is a broad term and is to be given its ordinary and customary meaning to a person of ordinary skill in the art and is not to be limited to a special or customized meaning. The term may refer, without limitation, to an element or device which is configured for interacting with its environment, such as for the purpose of unidirectionally or bidirectionally exchanging information, such as for exchange of one or more of data or commands. For example, the user interface may be configured to share information with a user and to receive information by the user. The user interface may be a feature to interact visually with a user, such as a display, or a feature to interact acoustically with the user. The user interface, as an example, may comprise one or more of: a graphical user interface; a data interface, such as a wireless and/or a wire-bound data interface. The method may comprise requesting, e.g. manual review of the measurement result, repeat the measurement, or perform instrument maintenance in case the measurement result is flagged as not fulfilling the quality check. For example, the method may comprise the following actions in case the measurement result is flagged as not fulfilling the quality check, e.g. in the given order:

1. Re-measurement of sample
2. Material investigation (lot expiry etc.)
3. Calibration of analyzer
4. Monitor analyzer (maintenance, malfunctions, etc.)
5. Monitor environment (humidity, temperature, etc.)
6. Additional investigation

The method steps a) to c) are performed by using at least one computer. Specifically, the determining of the information about the analyte signal and the internal standard signal, e.g. by performing a measurement, may be performed fully automatically. Moreover, the determining of the monitoring parameter and comparison in steps b) and c) may be performed fully automatically.

In a further aspect, a computer program including computer-executable instructions for performing the method according to any one of the embodiments as described herein is disclosed, specifically method steps a) to c), when the program is executed on a computer or computer network, specifically a processing device. Specifically, the computer program may be stored on a computer-readable data carrier and/or on a computer-readable storage medium.

As used herein, the terms "computer-readable data carrier" and "computer-readable storage medium" specifically may refer to non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM).

Thus, specifically, one, more than one or even all of method steps i) to iii) as indicated above may be performed by using a computer or a computer network, preferably by using a computer program.

Further disclosed and proposed herein is a computer program product having program code means, in order to perform the method according to the present invention in one or more of the embodiments enclosed herein when the program is executed on a computer or computer network. Specifically, the program code means may be stored on a computer-readable data carrier and/or on a computer-readable storage medium.

Further disclosed and proposed herein is a data carrier having a data structure stored thereon, which, after loading into a computer or computer network, such as into a working memory or main memory of the computer or computer network, may execute the method according to one or more of the embodiments disclosed herein.

Further disclosed and proposed herein is a non-transient computer-readable medium including instructions that, when executed by one or more processors, cause the one or more processors to perform the method according to one or more of the embodiments disclosed herein.

Further disclosed and proposed herein is a computer program product with program code means stored on a machine-readable carrier, in order to perform the method according to one or more of the embodiments disclosed herein, when the program is executed on a computer or computer network. As used herein, a computer program product refers to the program as a tradable product. The product may generally exist in an arbitrary format, such as in a paper format, or on a computer-readable data carrier and/or on a computer-readable storage medium. Specifically, the computer program product may be distributed over a data network.

Finally, disclosed and proposed herein is a modulated data signal which contains instructions readable by a computer system or computer network, for performing the method according to one or more of the embodiments disclosed herein.

Referring to the computer-implemented aspects of the invention, one or more of the method steps or even all of the method steps of the method according to one or more of the embodiments disclosed herein may be performed by using a computer or computer network. Thus, generally, any of the method steps including provision and/or manipulation of data may be performed by using a computer or computer network. Generally, these method steps may include any of the method steps, typically except for method steps requiring manual work, such as providing the samples and/or certain aspects of performing the actual measurements.

Specifically, further disclosed herein are:

- a computer or computer network comprising at least one processor, wherein the processor is adapted to perform the method according to one of the embodiments described in this description,

- a computer loadable data structure that is adapted to perform the method according to one of the embodiments described in this description while the data structure is being executed on a computer,

- a computer program, wherein the computer program is adapted to perform the method according to one of the embodiments described in this description while the program is being executed on a computer,

- a computer program comprising program means for performing the method according to one of the embodiments described in this description while the computer program is being executed on a computer or on a computer network,

- a computer program comprising program means according to the preceding embodiment, wherein the program means are stored on a storage medium readable to a computer,

- a storage medium, wherein a data structure is stored on the storage medium and wherein the data structure is adapted to perform the method according to one of the embodiments described in this description after having been loaded into a main and/or working storage of a computer or of a computer network, and

- a computer program product having program code means, wherein the program code means can be stored or are stored on a storage medium, for performing the method according to one of the embodiments described in this description, if the program code means are executed on a computer or on a computer network.

In a further aspect of the present invention, a system according to claim 10 is disclosed. The term "system" as used herein is a broad term and is to be given its ordinary and customary meaning to a person of ordinary skill in the art and is not to be limited to a special or customized meaning. The term specifically may refer, without limitation, to an arbitrary set of interacting or interdependent components forming a whole. Specifically, the components may interact with each other in order to fulfill at least one common function. The system may comprise at least two components, wherein the at least two components may be handled independently or may be coupled or connectable

The system comprises

- at least one liquid chromatography mass spectrometry device configured for performing at least one Liquid Chromatography-Mass Spectrometry (LC-MS) measurement on a sample comprising an analyte of interest and a defined amount of an internal standard;

- at least one processing device configured for obtaining and/or retrieving an information $peakArea_{aqn}$ about an analyte signal and an information $peakArea_{iqn}$ about an internal standard signal of the LC-MS measurement, wherein qn refers to a quantifier, wherein the processing device is further configured for determining at least one monitoring parameter by using the information about the analyte signal and the information about the internal standard signal, wherein the monitoring parameter comprises a minimal limit for the internal standard signal for said analyte signal of said sample, wherein the processing device is further configured for comparing the information about of the internal standard signal to the monitoring parameter, wherein the processing device is configured for flagging the LC-MS measurement as to fulfil the quality check in case the information about the internal standard signal is greater or equal to the monitoring parameter or otherwise as failed.

The system is configured for performing the method according to the present invention.

With respect to definitions and embodiments of the system, reference is made to definitions and embodiments of the method described above.

The system may further comprise at least one sample preparation unit configured for spiking the sample with the at least one internal standard.

Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:

Figure 1                 shows an embodiment of a system according to the present invention;

Figure 2                 shows a flow chart of an embodiment of the method according to the present invention; and

Figures 3A to 3C    show experimental results.

Detailed description of the embodiments

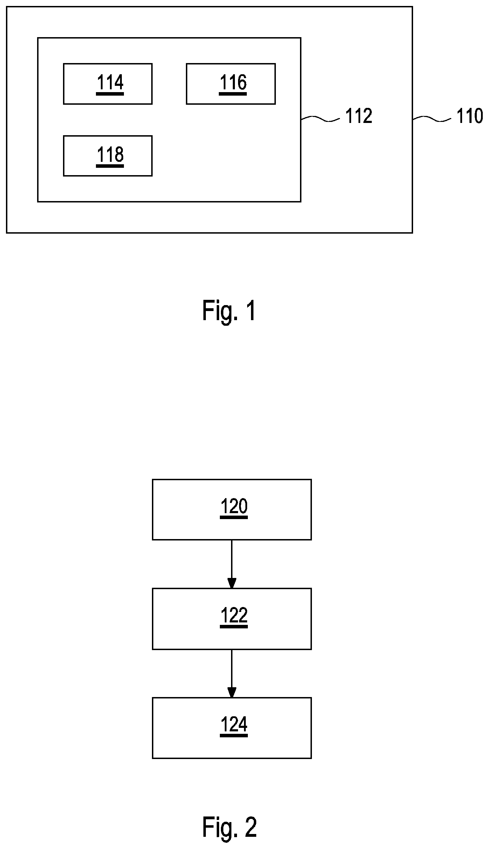

Figure 1 shows an embodiment of a system 110 according to the present invention in a highly schematic fashion.

The system 110 comprises at least one mass spectrometry device 112 configured for performing at least one Liquid Chromatography-Mass Spectrometry (LC-MS) measurement on a sample comprising an analyte of interest and a defined amount of an internal standard. The mass spectrometry device 112 may be or may comprise at least one quadrupole analyzer. The quadrupole mass analyzer may comprise a plurality of quadrupoles. For example, the quadrupole mass analyzer may be a triple quadrupole mass spectrometer. For example, the mass spectrometry device may comprise an ionization source, a skimmer, and three quadrupolar stages Q1, Q2 and Q3 and a detector. Each of the quadrupolar stages Q1, Q2 and Q3 comprising a quadrupole. The mass spectrometry device 112 may further comprise at least one ionization source. The ionization source may be or may comprise at least one source selected from the group consisting of: at least one gas phase ionization source such as at least one electron impact (EI) source or at least one chemical ionization (CI) source; at least one desorption ionization source such as at least one plasma desorption (PDMS) source, at least one fast atom bombardment (FAB) source, at least one secondary ion mass spectrometry (SIMS) source, at least one laser desorption (LDMS) source, and at least one matrix assisted laser desorption (MALDI) source; at least one spray ionization source such as at least one thermospray (TSP) source, at least one atmospheric pressure chemical ionization (APCI) source, at least one electrospray (ESI), and at least one atmospheric pressure ionization (API) source. The mass spectrometry device 112 may comprise at least one detector. The detector may be configured for detecting charged particles. The detector may be or may comprise at least one electron multiplier. The mass spectrometry device 112, in particular the detector and/or at least one processing device of the mass spectrometry device, may be configured to determining at least one mass spectrum of the detected ions. The LC-MS measurement may be or may comprise at least one measurement by using the mass spectrometry device 112. The mass spectrometry device 112 may be a liquid chromatography mass spectrometry device. The mass spectrometry device 112 may comprise at least one liquid chromatograph, also denoted as liquid chromatography (LC) device. The liquid chromatograph may be used as sample preparation for the mass spectrometry device. The LC device may comprise at least one LC column. For example, the LC device may be a single-column LC device or a multi-column LC device having a plurality of LC columns. The LC column may have a stationary phase through which a mobile phase is pumped in order to separate and/or elute and/or transfer the analytes of interest. The liquid chromatography mass spectrometry device may further comprise a sample preparation station for the automated pre-treatment and preparation of samples each comprising at least one analyte of interest. The liquid chromatography mass spectrometry device may be or may comprise at least one high performance liquid chromatography (HPLC) device or at least one micro liquid chromatography ($\mu$LC) device. The liquid chromatography mass spectrometry device may comprise a liquid chromatography (LC) device and a mass spectrometry (MS) device, in the present case the mass filter, wherein the LC device and the mass filter are coupled via at least one interface. The interface coupling the LC device and the MS device may comprise the ionization source configured for generating of molecular ions and for transferring of the molecular ions into the gas phase. The interface may further comprise at least one ion mobility module arranged between the ionization source and the mass filter. For example, the ion mobility module may be a high-field asymmetric waveform ion mobility spectrometry (FAIMS) module.

The mass spectrometry device 112 may be configured for performing an end-to-end workflow (also denoted as sample measurement workflow) in which a sample is injected into an inlet of the liquid chromatography column, the sample is separated into components on the column, and individual components are eluted from the column. The eluted components are directed into the mass spectrometer where they are ionized and analyzed. The mass spectrometry device 112 may measure ion fragmentation patterns associated with each of the components. Each ion fragmentation pattern consists of one or more peaks corresponding to ion fragments with particular m/z ratios. The pattern of peaks for a particular analyte (e.g., the m/z ratios and intensities of the peaks) effectively function as a "fingerprint" for the analyte. Due to the complex nature of the fragmentation pattern, a wide variety of components can be identified and quantified based on such measurements. Typically, identification is performed by comparing a measured ion fragmentation pattern with reference information (e.g., previously measured or simulated ion fragmentation patterns for known components). Identification of particular components can also be performed based on the time interval between initial introduction of the sample (e.g., injection into the inlet of the LC-MS system) and elution of a component from the LC column, or the time interval between initial introduction of the sample and measurement of a component ion fragmentation pattern in the mass spectrometer. Certain components may migrate through the LC column at particular rates, and the elapsed time interval can be used as an indicator of the component's identity. As with ion fragmentation patterns, the elapsed time interval can be compared with reference information (e.g., previously measured migration and/or measurement times for known components) to determine the component's identity.

The mass spectrometry device 112 may be configured for measuring a wide variety of biological samples. Examples of such samples include, but are not limited to, physiological fluid, including blood, serum, plasma, urine, sweat, saliva, ocular lens fluid, cerebral spinal fluid, milk, ascites fluid, mucous, synovial fluid, peritoneal fluid, amniotic fluid, lymph fluid, interstitial fluid, cerebrospinal fluid, tissue, cells or the like.

The sample may comprise one or more analytes of interest, also denoted as targeted analyte. The sample may be used directly as obtained from the respective source or may be subject of a pretreatment and/or sample preparation workflow. For example, the sample may be pretreated by adding an internal standard and/or by being diluted with another solution and/or by having being mixed with reagents or the like. For example, analytes of interest may be vitamin D, drugs of abuse, therapeutic drugs, hormones, and metabolites in general. For further details with respect to the sample, reference is made e.g. to EP 3 425 369 A1, the full disclosure is included herewith by reference. Other analytes of interest are possible.

The system 110 may be configured for performing at least one quality check. The quality may be a measure for reliability of a measurement result obtained by using the mass spectrometry device 112. The measurement result may be a quantitative and/or qualitative measurement such as a presence and/or a concentration of the analyte in the sample. The quality may depend on several factors such as measurement conditions, background, interferences, instrument performance, shifts in retention time, peak width, peak height, and peak area. The quality check may be or may comprise at least one process of testing, after data acquisition, if at least one pre-defined quality requirement is fulfilled. The quality check may be used for distinguishing trustworthy and untrustworthy measurement results. The trustworthy measurement result may be a measurement result whose corresponding internal standard signal fulfills at least one pre-defined requirement. The trustworthy measurement result may be a measurement result having a precision and/or accuracy within a predefined tolerance range. The untrustworthy measurement result may be a measurement result whose corresponding internal standard signal fails to fulfill at least one pre-defined requirement. The untrustworthy measurement result may be a measurement result having a precision and/or accuracy outside the tolerance range.

For example, the quality check may be performed for each measurement. For example, the quality check may be performed with a predefined frequency such as one or more of after a predefined time span, after new calibration, after column exchange, or after maintainance activities at the instrument.

The system 110 comprises at least one processing device 114 configured for obtaining and/or retrieving an information $peakArea_{aqn}$ about an analyte signal and an information $peakArea_{iqn}$ about an internal standard signal of the LC-MS measurement, wherein qn refers to a quantifier.

The analyte signal may be a signal of the LC-MS measurement relating to the analyte such as a peak in the chromatogram and/or mass spectrum of the analyte.

An internal standard may exhibit similar properties as the analyte of interest when subjected to a workflow using the mass spectrometry device 112. The workflow may comprise any pre-treatment, enrichment and actual detection step. For example, the internal standard may be an isotopically labeled variant (comprising e.g. 2H, 13C, or 15N etc. label) of the analyte of interest. The system 110 may be configured for spiking the sample with the at least one internal standard. The internal standard signal may be a signal of the LC-MS measurement relating to the internal standard such as a peak in the chromatogram and/or mass spectrum of the internal standard. The information about the analyte signal may at least one of a peak area, a peak height, a peak width, or a retention time. The information about the internal standard signal may be at least one of a peak area, a peak height, a peak width, or a retention time.

The determining of the information about the analyte signal and the information about the internal standard signal may comprise one or more of measuring, obtaining or retrieving measurement data.

For example, the information about the analyte signal and the information about the internal standard signal may be determined by performing at least one LC-MS measurement by using the mass spectrometry device 112. For example, the determining may comprise performing at least one LC-MS measurement on the sample, e.g. by using the at least one liquid chromatography mass spectrometry device 112.

For example, the information about the analyte signal and the information about the internal standard signal may be determined by retrieving measurement data via at least one communication interface 116 e.g. of the processing device 114. The measurement data which is retrieved by the communication interface 114 may be obtained by using a mass spectrometry device, e.g. the mass spectrometry device 112, and may be transmitted to the processing device 114. For example, the measurement data may be retrieved by the communication interface 114 from at least one database. For example, the determining may comprise retrieving at least one chromatogram and/or mass spectrum by the processing device 114, e.g. via its communication interface 116. The processing device 114 and/or the database may be at least partially cloud-based.

The determining may further comprise processing the measured or retrieved measurement data for determining the information about the analyte signal and the information about the internal standard signal by using the processing device 114. For example, the determining may comprise applying at least one peak fit modelling to the chromatogram and/or mass spectrum by using the processing device 114.

The processing device 114 is further configured for determining at least one monitoring parameter by using the information about the analyte signal and the information about the internal standard signal. The monitoring parameter comprises a minimal limit for the internal standard signal for said analyte signal of said sample.

The monitoring parameter may be one or more of a readout parameter, a measurand, or a measurable parameter suitable as a basis for a quality check, e.g. for distinguishing between trustworthy and untrustworthy measurement results. As outlined above, concept for quality checks are known e.g. from several international guidelines for mass spectrometric assays, such as those by the CLSI (Clinical and Laboratory Standards Institute), the EMA (European Medicines Agency), or the GTFCh (German society for toxicological and forensic chemistry). The monitoring parameter according to the present invention may be an advanced monitoring parameter. The monitoring parameter according to the present invention may allow to supplement the known and common parameters, e.g. in cases they lack in reliability due to e.g. high variability. Using said monitoring parameter may allow reducing the need for manual peak review by an expert due to false sample flagging without reducing the power of the parameter monitoring for quality assurance purposes.

The determining of the monitoring parameter comprises using the information about the analyte signal and the information about the internal standard signal by the processing device 114. The monitoring parameter comprises a minimal limit for the internal standard signal for said analyte signal of said sample. The determining of the monitoring parameter may comprise the processing device 114 calculating a monitoring parameter using the information about the analyte signal and the information about the internal standard signal. The monitoring parameter may be determined by combining a value for a minimum IStd signal limit with a dependency of the measured analyte signal for each sample. The determining of the monitoring parameter may be performed by executing a software algorithm.

The monitoring parameter may allow reducing false result flagging (false-positives) and overlooking of bad measurements (false-negatives) to a minimum. The monitoring parameter may be superior compared to a simple absolute minimum IStd signal limit. The rationale may be based on the required precision of an assay and the fact that the precision is dependent on the signal. In general, a decrease of the signal usually also leads to a decrease of precision. The analyte signal may be normalized by the IStd signal. Therefore, the final measurement result may dependent on both, analyte and IStd signal. After determining needed parameters on one system, a minimal limit for the IStd signal may be calculated individually for each analyte signal on every other system that is needed to achieve required precision for the assay in a particular sample.

The monitoring parameter is determined by

$$\frac{b^2 \times (peakArea_{aqn})^2}{-a \times b \times (peakArea_{aqn})^2 + \sqrt{-b^2 \times (peakArea_{aqn})^2 \times (b + (a - CV_{psd}) \times peakArea_{aqn}) * (b + (a + CV_{psd}) \times peakArea_{aqn})}},$$

wherein a and b are predetermined parameters, wherein $CV_{psd}$ is a predefined precision acceptance criterion for a coefficient of variation for an assay.

In the following derivation of the monitoring parameter is described:

If the signal ratio of analyte and IStd signal, represented in the following by the area ratio of analyte quantifier (aqn) and IStd quantifier (iqn), is measured, the precision, represented in the following by the CV, may be estimated by

equation 1.

$$(eq.1) \; CV_{aqniqn} = \sqrt{(CV_{aqn})^2 + (CV_{iqn})^2}$$

The correlation of the area values for aqn and iqn may not be known a priori. However, negative correlation is not assumed due to the general need of a certain degree of similarity in e.g. physico-chemical behavior of analyte and IStd (assumption 1). Thus, only positive correlation may be assumed while no correlation represents the worst case (assumption 2). Any positive correlation of the area values for aqn and iqn may lead to decrease of the resulting CV(aqniqn), i.e. getting better, when the area ratio aqn/iqn is calculated. In the following, assumption 1 and 2 is described. If there is a correlation, the respective coefficient may need to be implemented to the equation accordingly. The dependency of the signals and the respective CV for the areas of aqn and iqn can follow one of two function types. Either according to equation 2 for aqn and equation 3 for iqn or according to equation 4 for aqn and equation 5 for iqn.

$$(eq.2) \; CV_{aqn} = a + b \times \frac{1}{peakArea_{aqn}}$$

and

$$(eq.3) \; CV_{iqn} = c + d \times \frac{1}{peakArea_{iqn}}$$

$$(eq.4) \; CV_{aqn} = a + b \times \frac{1}{\sqrt{peakArea_{aqn}}}$$

and

$$(eq.5) \; CV_{iqn} = c + d \times \frac{1}{\sqrt{peakArea_{iqn}}}$$

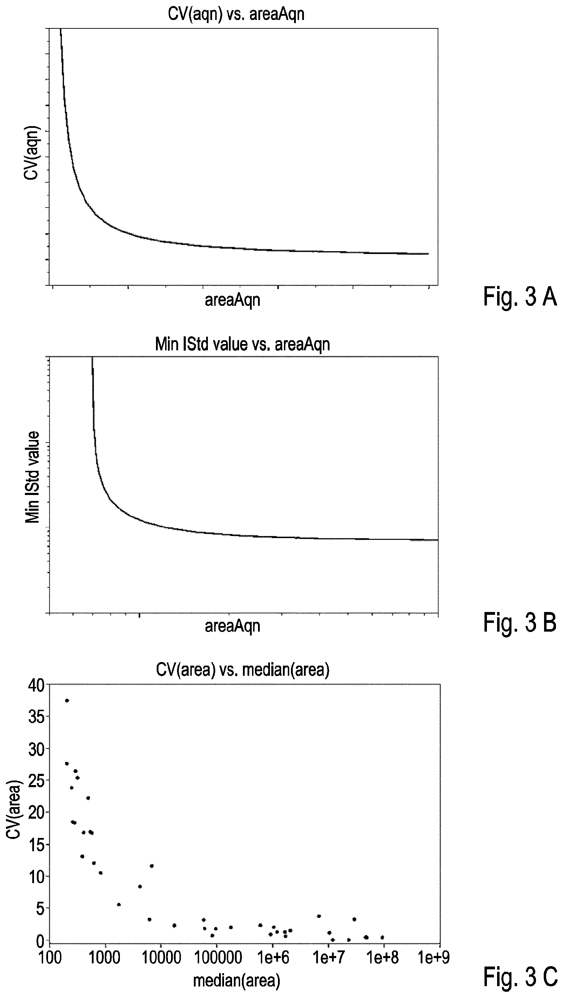

In Figure 3A, a graph of equation 2 is illustrated as example. In this exemplified graph of equation 2, for illustration, the peakArea(aqn) on x-axis and CV(aqn) on y-axis is shown.

In the following, equation 2 and 3 is illustrated. Further, the behavior of analyte and internal standard should be highly similar for MS measurements. In these cases, it could also be assumed that *CV(aqn) ≈ CV(iqn),* thus parameter c = *a* and *d = b* (assumption 3). In the following, assumption 3 is illustrated. The combination of equation 1 with equation 2 and 3 leads to equation 6 given by

$$(eq.6) \; CV_{aqniqn} = \sqrt{\left(a + b \times \frac{1}{peakArea_{aqn}}\right)^2 + \left(a + b \times \frac{1}{peakArea_{iqn}}\right)^2}$$

The precision acceptance criterion for an assay is given by CV(assay). The actual precision of the result CV(result) need to fulfill this criterion according to equation 7.

$$(eq.7) \; CV_{assay} \geq CV_{result}$$

The main part of imprecision is based on the signals themselves, that is CV(aqniqn), and not on the calibration which transfers the signals to concentrations and thus, to the result. Therefore, in the following it is assumed that *CV(result) ≈ CV(aqniqn)* (assumption 4). That leads from equation 7 to equation 8. The combination of equation 6 with equation 8 lead to equation 9.

$$(eq.8) \; CV_{assay} \geq CV_{aqniqn}$$

$$(eq.9) \; CV_{assay} \geq \sqrt{\left(a + b \times \frac{1}{peakArea_{aqn}}\right)^2 + \left(a + b \times \frac{1}{peakArea_{iqn}}\right)^2}$$

Solving the equation 9 for peakArea(iqn) leads to the following equation 10 and the monitoring parameter.

$$(eq.10) \; peakArea_{iqn} \geq \frac{b^2 \times (peakArea_{aqn})^2}{-a \times b \times (peakArea_{aqn})^2 + \sqrt{-b^2 \times (peakArea_{aqn})^2 \times (b + (a - CV_{psd}) \times peakArea_{aqn}) * (b + (a + CV_{psd}) \times peakArea_{aqn})}}$$

Equation 10 may represent the basis for the minimal limit for the IStd signal needed for a measured analyte signal to achieve a required precision of the measurement result. This calculation may be based on the assumption that the precision of the measurement result mainly depends on the measured signal despite its root cause. That means that it would not matter whether a signal loss was due to e.g. a lower concentrated sample or due to lower MS performance (assumption 5). Additional factors in MS performance loss, such as background increase or noise increase may also lead to effects for the measurement result, as well.

The method may comprise considering discontinuities for the monitoring parameter using at least one checking rule. It is assumed that a > 0, b > 0, peakArea(aqn) > 0, and CV(assay) > 0 hold. The checking rule may use a plurality of criteria, wherein the criteria are

i.

$$-a \times b \times (peakArea_{aqn})^2 + \\ \sqrt{-b^2 \times (peakArea_{aqn})^2 \times (b + (a - CV_{psd}) \times peakArea_{aqn}) \times (b + (a + CV_{psd}) \times peakArea_{aqn})} \leq \\ 0;$$

ii.

$$peakArea_{aqn} \leq \frac{b}{\sqrt{(CV_{psd})^2 - a^2} - a};$$

iii.

$$\frac{CV_{psd}}{\sqrt{2}} > a;$$

iv.

$$-b^2 \times (peakArea_{aqn})^2 \times (b + (a - CV_{psd}) \times peakArea_{aqn}) \times (b + (a + CV_{psd}) \times peakArea_{aqn}) < 0;$$

v.

$$peakArea_{iqn} = +\infty;$$

wherein the checking rule comprises

- determining if equation iv is true, then equation v is used as monitoring parameter, else
- determining if equation ii and iii are both true, then equation v is used as monitoring parameter, else
- determining if equation i is true, then equation v is used as monitoring parameter, else
- using the monitoring parameter of equation 10 as monitoring parameter.

Equation i may allow for checking for the denominator of equation 10 leading to negative peakArea(iqn) values. Equations ii and iii may allow for checking for peakArea(iqn) values below the discontinuity in the peakArea(aqn). Equation iv may allow for checking for negative root in the denominator.

In Figure 3B, an exemplified graph is shown for equation 10 combined with the mentioned rules. Signal values above or right of the curve are within the acceptance criteria of the check, those below or left of the curve not and should be flagged.

The parameters a and b may be determined by performing a plurality of LC-MS measurements on the sample. For each measurement the information about the analyte signal may be determined. The method may comprise, by using the processing device, determining a median or mean of the information about the analyte signal and its CV(aqn), and calculating the parameters a and b by using at least one regression fit according to

$$CV_{aqn} = a + b \times \frac{1}{peakArea_{aqn}} \text{ or } CV_{aqn} = a + b \times \frac{1}{\sqrt{peakArea_{aqn}}}.$$

The processing device 114 is further configured for comparing the information about of the internal standard signal to the monitoring parameter. The processing device 114 is configured for flagging the LC-MS measurement as to fulfil the quality check in case the information about the internal standard signal is greater or equal to the monitoring parameter or otherwise as failed. The comparison may comprise at least one mathematical operation. The comparison may comprise determining a deviation between the information about the internal standard signal to the monitoring parameter. The LC-MS measurement is flagged by using the processing device as to fulfil the quality check in case the information about the internal standard signal is greater or equal to the monitoring parameter or otherwise, i.e. in case the information about the internal standard signal is lower than the monitoring parameter, as failed. The comparison may comprise considering a predefined tolerance range. The predefined tolerance range may be a deviation of $\pm$ 20%, preferably $\pm$ 15%, more preferably $\pm$ 10% from the monitoring parameter. The predefined tolerance range may be fixed or may be adjustable, e.g. by a user. The comparison may be performed by executing a software algorithm.

The system 110 may comprise at least one user interface 118. The system 110 may be configured for providing an outcome of the quality check, e.g. if the measurement result is flagged or not. The providing may comprise displaying the outcome to a user. The displaying may be performed by using the user interface 118. The user interface 118, as an example, may comprise one or more of: a graphical user interface; a data interface, such as a wireless and/or a wire-bound data interface. The user interface 118 may be configured for requesting, e.g. manual review of the measurement result, repeat the measurement, or perform instrument maintenance in case the measurement result is flagged as not fulfilling the quality check. For example, the method may comprise the following actions in case the measurement result is flagged as not fulfilling the quality check, e.g. in the given order:

1. Re-measurement of sample
2. Material investigation (lot expiry etc.)
3. Calibration of analyzer
4. Monitor analyzer (maintenance, malfunctions, etc.)
5. Monitor environment (humidity, temperature, etc.)
6. Additional investigation

Figure 2 shows a flow chart of an embodiment of the method according to the present invention. The method comprises the following steps

a) (120) determining an information *peakArea_{aqn}* about an analyte signal and an information *peakArea_{iqn}* about an internal standard signal of the LC-MS measurement, wherein qn refers to a quantifier;
b) (122) determining at least one monitoring parameter by using the information about the analyte signal and the information about the internal standard signal by using at least one processing device 114, wherein the monitoring parameter comprises a minimal limit for the internal standard signal for said analyte signal of said sample;
c) (124) comparing the information about the internal standard signal to the monitoring parameter by using the processing device 114, wherein the LC-MS measurement is flagged by using the processing device 114 as to fulfil the quality check in case the information about the internal standard signal is greater or equal to the monitoring parameter or otherwise as failed.

The determining of the information about the analyte signal and the internal standard signal, e.g. by performing a measurement, may be performed fully automatically. Moreover, the determining of the monitoring parameter and comparison in steps b) and c) may be performed fully automatically.

With respect to embodiments of the method reference is made to the description of the system 110 shown in Figure 1.

Figure 3C shows experimental results. Serum samples were spiked with estradiol and testosterone to ten different concentrations, respectively, covering the whole measuring range of the respective assays. The compounds estradiol-13C3 and testosterone-13C3 were spiked with a constant amount before sample preparation as IStd. Each sample was measured by LC-triple quadrupole(QqQ)-MS in 21 analytical replicates and the chromatographic data integrated to get the peak area of analyte and IStd as signal. Subsequently, the median analyte area and its CV(aqn) was determined and plotted. An exemplified graph for estradiol is shown in Figure 3C.

A regression fit was performed according to equation 2 as best fit compared to equation 3 and the parameters "a" and "b" were calculated. Parameter "a" was 2.69 for estradiol and 3.84 for testosterone, parameter "b" was 5682 for estradiol and 34659 for testosterone. For further calculation, the assumptions 1 to 5 (see above) were taken into consideration. In addition, a simple minimum IStd signal limit, as established and common parameter, was optimized and determined for estradiol and testosterone (denoted as simple IStd check in the following).

For verification, ten serum samples spiked with estradiol and testosterone to different concentrations were measured in three analytical replicates at two different instruments and at four different time points. Between each time point, the systems were used to run several hundreds of serum samples to impact the system performance. The required assay precision was set to CV(assay) of 20%. By the rule given above using equation 10 and criteria i, ii, iii, iv, and v and the pre-defined parameters "a" and "b", the minimal limit for the IStd signal was determined for each analyte and sample. Afterwards, the corresponding measured value was checked (i) versus the advanced minimal IStd signal limit calculated for each sample (advanced IStd check) and (ii) versus the simple IStd signal limit (simple IStd check). As reference, the CV(aqniqn) was calculated for each analyte and sample based on the analytical replicates and checked versus the required CV(assay) and flagged accordingly (assay result check). This assay result check revealed that 77% of all measurements were okay, 23% were not okay. The relative flagging rate of all analytes and samples for advanced IStd check and for simple IStd check versus the assay result check, respectively, is summarized in the following table.

*Table: Relative flagging rate for advanced IStd check versus assay result check and simple IStd check versus assay result check.*

|  |  | assay result check | |
|---|---|---|---|
|  |  | okay | not okay |
| **advanced IStd check** | okay | 76.9% | 6.2% |
|  | not okay | 0.2% | 16.7% |
| **simple IStd check** | okay | 70.1% | 13.4% |
|  | not okay | 7.0% | 9.5% |

The table showed that the advanced IStd check correctly flagged 93.6% of all samples (76.9% both okay, 16.7% both not okay) and the simple IStd check 79.6% (70.1% both okay, 9.5% both not okay).

In conclusion, the advanced IStd check correctly flagged +14.0% more samples compared to the established simple IStd check. This showed that the presented advanced monitoring parameter could reduce false result flagging (false-positives) and overlooking of bad measurements (false-negatives) to a minimum and was superior compared to the established monitoring parameter.

List of reference numbers

**[0111]**

110    system
112    mass spectrometry device
114    processing device
116    communication interface
118    user interface
120    Step a)
122    Step b)
124    Step c)

**Claims**

1. A computer-implemented method for quality check of at least one Liquid Chromatography-Mass Spectrometry (LC-MS) measurement on a sample comprising an analyte of interest and a defined amount of at least one internal standard, wherein the method comprises the following steps

    a) (120) determining an information ($peakArea_{aqn}$) about an analyte signal and an information ($peakArea_{iqn}$)

about an internal standard signal of the LC-MS measurement, wherein qn refers to a quantifier, aqn relates to an analyte quantifier and iqn relates to an internal standard quantifier;

b) (122) determining at least one monitoring parameter by using the information about the analyte signal and the information about the internal standard signal by using at least one processing device (114), wherein the monitoring parameter comprises a minimal limit for the internal standard signal for said analyte signal of said sample, wherein the monitoring parameter is determined by

$$\frac{b^2 \times (peakArea_{aqn})^2}{-a \times b \times (peakArea_{aqn})^2 + \sqrt{-b^2 \times (peakArea_{aqn})^2 \times (b + (a - CV_{psd}) \times peakArea_{aqn}) * (b + (a + CV_{psd}) \times peakArea_{aqn})}},$$

wherein a and b are predetermined parameters, wherein $CV_{psd}$ is a predefined precision acceptance criterion for a coefficient of variation for an assay, wherein the parameters a and b are determined by performing a plurality of LC-MS measurements on the sample, wherein for each measurement the information about the analyte signal is determined, wherein the method comprises, by using the processing device (114), determining a median or mean of the information about the analyte signal and its CV(aqn), and calculating the parameters a and b by using at least one regression fit according to

$$CV_{aqn} = a + b \times \frac{1}{peakArea_{aqn}} \text{ or } CV_{aqn} = a + b \times \frac{1}{\sqrt{peakArea_{aqn}}},$$

wherein CV(aqn) is the coefficient of variation of the analyte quantifier;

c) (124) comparing the information about the internal standard signal to the monitoring parameter by using the processing device (114), wherein the LC-MS measurement is flagged by using the processing device (114) as to fulfil the quality check in case the information about the internal standard signal is greater or equal to the monitoring parameter or otherwise as failed.

2. The method according to the preceding claim, wherein the information about the analyte signal is at least one of a peak area of the analyte quantifier, a peak height of the analyte quantifier, a peak width of the analyte quantifier, or a retention time of the analyte quantifier, wherein the information about the internal standard signal is at least one of a peak area of the internal standard quantifier, a peak height of the internal standard quantifier, a peak width of the internal standard quantifier, or a retention time of the internal standard quantifier.

3. The method according to any one of the preceding claims, wherein the method comprises considering discontinuities for the monitoring parameter using at least one checking rule, wherein the checking rule uses a plurality of criteria, wherein the criteria are

   i.

$$-a \times b \times (peakArea_{aqn})^2 + \sqrt{-b^2 \times (peakArea_{aqn})^2 \times (b + (a - CV_{psd}) \times peakArea_{aqn}) \times (b + (a + CV_{psd}) \times peakArea_{aqn})} \leq 0;$$

   ii.

$$peakArea_{aqn} \leq \frac{b}{\sqrt{(CV_{psd})^2 - a^2} - a};$$

   iii.

$$\frac{CV_{psd}}{\sqrt{2}} > a;$$

   iv.

$$-b^2 \times (peakArea_{aqn})^2 \times (b + (a - CV_{psd}) \times peakArea_{aqn}) \times (b + (a + CV_{psd}) \times peakArea_{aqn}) < 0;$$

v.

$$peakArea_{iqn} = +\infty;$$

wherein the checking rule comprises

- determining if equation iv is true, then equation v is used as monitoring parameter, else
- determining if equation ii and iii are both true, then equation v is used as monitoring parameter, else
- determining if equation i is true, then equation v is used as monitoring parameter, else
- using the monitoring parameter of claim 1 as monitoring parameter.

4. The method of to any one of the preceding claims, wherein step a) (120) comprises performing at least one LC-MS measurement on the sample.

5. The method of to the preceding claim, wherein in step a) (120) at least one liquid chromatography mass spectrometry device is used.

6. The method according to any one of the preceding claims, wherein the method comprises spiking the sample with the at least one internal standard.

7. A computer program comprising instructions which, when the program is executed by a processing device (114), cause the processing device (114) to perform the method according to any one of the preceding claims.

8. A computer-readable storage medium comprising instructions which, when the instructions are executed by the processing device (114), cause the processing device (114) to perform the method according to any one of the preceding claims referring to a method.

9. A non-transient computer-readable medium including instructions that, when executed by one or more processors, cause the one or more processors to perform the method according to any one of the preceding claims referring to a method.

10. A system (110) comprising

- at least one liquid chromatography mass spectrometry device (112) configured for performing at least one Liquid Chromatography-Mass Spectrometry (LC-MS) measurement on a sample comprising an analyte of interest and a defined amount of an internal standard;
- at least one processing device (114) configured for obtaining and/or retrieving an information $peakArea_{aqn}$ about an analyte signal and an information $peakArea_{iqn}$ about an internal standard signal of the LC-MS measurement, wherein qn refers to a quantifier, wherein the processing device (114) is further configured for determining at least one monitoring parameter by using the information about the analyte signal and the information about the internal standard signal, wherein the monitoring parameter comprises a minimal limit for the internal standard signal for said analyte signal of said sample, wherein the monitoring parameter is determined by

$$-\frac{b^2 \times (peakArea_{aqn})^2}{-a \times b \times (peakArea_{aqn})^2 + \sqrt{-b^2 \times (peakArea_{aqn})^2 \times (b + (a - CV_{psd}) \times peakArea_{aqn}) * (b + (a + CV_{psd}) \times peakArea_{aqn})}},$$

wherein a and b are predetermined parameters, wherein $CV_{psd}$ is a predefined precision acceptance criterion for a coefficient of variation for an assay, wherein the parameters a and b are determined by performing a plurality of LC-MS measurements on the sample, wherein for each measurement the information about the analyte signal is determined, wherein the method comprises, by using the processing device (114), determining a median or mean of the information about the analyte signal and its CV(aqn), and calculating the parameters a and b by using at least one regression fit according to

$$CV_{aqn} = a + b \times \frac{1}{peakArea_{aqn}} \text{ or } CV_{aqn} = a + b \times \frac{1}{\sqrt{peakArea_{aqn}}},$$

wherein CV(aqn) is the coefficient of variation of the analyte quantifier;
- wherein the processing device (114) is further configured for comparing the information about of the internal standard signal to the monitoring parameter, wherein the processing device (114) is configured for flagging the LC-MS measurement as to fulfil the quality check in case the information about the internal standard signal is greater or equal to the monitoring parameter or otherwise as failed.

11. The system (110) according to the preceding claim, wherein the system (110) is configured for performing the method according to any one of claims referring to a method.

**Patentansprüche**

1. Computerimplementiertes Verfahren zur Qualitätsprüfung von mindestens einer Flüssigchromatographie-Massenspektrometrie-(LC-MS-)Messung an einer Probe, die einen Analyten von Interesse und eine definierte Menge von mindestens einem internen Standard umfasst, wobei das Verfahren die folgenden Schritte umfasst

a) (120) Bestimmen einer Information (*Peakfläche$_{aqn}$*) über ein Analytsignal und einer Information (*Peakfläche$_{iqn}$*) über ein Signal eines internen Standards der LC-MS-Messung, wobei sich qn auf einen Quantifizierer bezieht, aqn auf einen Analytquantifizierer bezieht und iqn auf einen Quantifizierer eines internen Standards bezieht;

b) (122) Bestimmen mindestens eines Überwachungsparameters durch Verwenden der Information über das Analytsignal und der Information über das Signal eines internen Standards durch Verwenden mindestens einer Verarbeitungsvorrichtung (114), wobei der Überwachungsparameter eine Mindestgrenze für das Signal eines internen Standards für das Analytsignal der Probe umfasst, wobei der Überwachungsparameter wie folgt bestimmt wird

$$\frac{b^2 \times \left(Peakfläche_{aqn}\right)^2}{-a \times b \times \left(Peakfläche_{aqn}\right)^2 + \sqrt{-b^2 \times \left(Peakfläche_{aqn}\right)^2 \times \left(b + (a - CV_{psd}) \times Peakfläche_{aqn}\right) * \left(b + (a + CV_{psd}) \times Peakfläche_{aqn}\right)}},$$

wobei a und b vorbestimmte Parameter sind, wobei $CV_{psd}$ ein vordefiniertes Präzisionsannahmekriterium für einen Variationskoeffizienten für einen Assay ist, wobei die Parameter a und b mittels Durchführen einer Vielzahl von LC-MS-Messungen an der Probe bestimmt werden, wobei für jede Messung die Information über das Analytsignal bestimmt wird, wobei das Verfahren unter Verwendung der Verarbeitungsvorrichtung (114) das Bestimmen eines Median- oder Mittelwertes der Information über das Analytsignal und ihres CV(aqn) und das Berechnen der Parameter a und b durch Verwenden mindestens einer Regressionsanpassung gemäß

$$CV_{aqn} = a + b \times \frac{1}{Peakfläche_{aqn}} \; oder \; CV_{aqn} = a + b \times \frac{1}{\sqrt{Peakfläche_{aqn}}},$$

umfasst, wobei CV(aqn) der Variationskoeffizient des Analytquantifizierers ist;

c) (124) Vergleichen der Information über das Signal eines internen Standards mit dem Überwachungsparameter unter Verwendung der Verarbeitungsvorrichtung (114), wobei die LC-MS-Messung unter Verwendung der Verarbeitungsvorrichtung (114) als die Qualitätsprüfung erfüllt, wenn die Information über das Signal eines internen Standards größer als der oder gleich dem Überwachungsparameter ist, oder andernfalls als fehlgeschlagen markiert wird.

2. Verfahren nach dem vorstehenden Anspruch, wobei die Information über das Analytsignal mindestens eines von einer Peakfläche des Analytquantifizierers, einer Peakhöhe des Analytquantifizierers, einer Peakbreite des Analytquantifizierers oder einer Retentionszeit des Analytquantifizierers ist, wobei die Information über das Signal eines internen Standards mindestens eines von einer Peakfläche des Quantifizierers eines internen Standards, einer Peakhöhe des Quantifizierers eines internen Standards, einer Peakbreite des Quantifizierers eines internen Standards oder einer Retentionszeit des Quantifizierers eines internen Standards ist.

3. Verfahren nach einem der vorstehenden Ansprüche, wobei das Verfahren das Berücksichtigen von Unstetigkeiten für den Überwachungsparameter unter Anwendung mindestens einer Prüfregel umfasst, wobei die Prüfregel eine Vielzahl von Kriterien nutzt, wobei die Kriterien die Folgenden sind

i.

$$-a \times b \times \left(Peakfläche_{aqn}\right)^2 +$$
$$\sqrt{-b^2 \times \left(Peakfläche_{aqn}\right)^2 \times \left(b + \left(a - CV_{psd}\right) \times Peakfläche_{aqn}\right) \times \left(b + \left(a + CV_{psd}\right) \times Peakfläche_{aqn}\right)}$$
$$\leq 0;$$

ii.

$$Peakfläche_{aqn} \leq \frac{b}{\sqrt{(CV_{psd})^2 - a^2} - a};$$

iii.

$$\frac{CV_{psd}}{\sqrt{2}} > a;$$

iv.

$$-b^2 \times (Peakfläche_{aqn})^2 \times (b + (a - CV_{psd}) \times Peakfläche_{aqn}) \times (b + (a + CV_{psd}) \times Peakfläche_{aqn}) < 0;$$

v.

$$Peakfläche_{iqn} = +\infty;$$

wobei die Prüfregel Folgendes umfasst

- Bestimmen, ob Gleichung iv wahr ist, dann wird Gleichung v als Überwachungsparameter verwendet, sonst
- Bestimmen, ob Gleichung ii und iii beide wahr sind, dann wird Gleichung v als Überwachungsparameter verwendet, sonst
- Bestimmen, ob Gleichung i wahr ist, dann wird Gleichung v als Überwachungsparameter verwendet, sonst
- Verwendung des Überwachungsparameters nach Anspruch 1 als Überwachungsparameter.

4. Verfahren nach einem der vorstehenden Ansprüche, wobei Schritt a) (120) das Durchführen mindestens einer LC-MS-Messung an der Probe umfasst.

5. Verfahren nach dem vorstehenden Anspruch, wobei in Schritt a) (120) mindestens eine Flüssigchromatographie-Massenspektrometrie-Vorrichtung verwendet wird.

6. Verfahren nach einem der vorstehenden Ansprüche, wobei das Verfahren das Spiken der Probe mit dem mindestens einen internen Standard umfasst.

7. Computerprogramm, umfassend Anweisungen, die beim Ausführen des Programms von einer Verarbeitungsvorrichtung (114) die Verarbeitungsvorrichtung (114) veranlassen, das Verfahren nach einem der vorstehenden Ansprüche auszuführen.

8. Computerlesbares Speichermedium, umfassend Anweisungen, die beim Ausführen der Anweisungen von der Verarbeitungsvorrichtung (114) die Verarbeitungsvorrichtung (114) veranlassen, das Verfahren nach einem der vorstehenden Ansprüche, die sich auf ein Verfahren beziehen, auszuführen.

9. Nicht flüchtiges, computerlesbares Medium, das Anweisungen einschließt, die beim Ausführen von einem oder mehreren Prozessor(en), den einen oder die mehreren Prozessor(en) veranlassen, das Verfahren nach einem der vorstehenden Ansprüche, die sich auf ein Verfahren beziehen, auszuführen.

10. System (110), umfassend

- mindestens eine Flüssigchromatographie-Massenspektrometrie-Vorrichtung (112), die dafür ausgebildet ist, mindestens eine Flüssigchromatographie-Massenspektrometrie-(LC-MS-)Messung an einer Probe auszuführen, die einen Analyten von Interesse und eine definierte Menge eines internen Standards umfasst;

- mindestens eine Verarbeitungsvorrichtung (114), die dafür ausgebildet ist, eine Information *Peakfläche*$_{aqn}$ über ein Analytsignal und eine Information *Peakfläche*$_{iqn}$ über ein Signal eines internen Standards der LC-MS-Messung zu erhalten und/oder abzurufen, wobei sich qn auf einen Quantifizierer bezieht, wobei die Verarbeitungsvorrichtung (114) ferner dafür ausgebildet ist, mindestens einen Überwachungsparameter unter Verwendung der Information über das Analytsignal und der Information über das Signal eines internen Standards zu bestimmen, wobei der Überwachungsparameter eine Mindestgrenze für das Signal eines internen Standards für das Analytsignal der Probe umfasst, wobei der Überwachungsparameter wie folgt bestimmt wird

$$\frac{b^2 \times \left(Peakfläche_{aqn}\right)^2}{-a \times b \times \left(Peakfläche_{aqn}\right)^2 + \sqrt{-b^2 \times \left(Peakfläche_{aqn}\right)^2 \times \left(b + \left(a - CV_{psd}\right) \times Peakfläche_{aqn}\right) * \left(b + \left(a + CV_{psd}\right) \times Peakfläche_{aqn}\right)}},$$

wobei a und b vorbestimmte Parameter sind, wobei $CV_{psd}$ ein vordefiniertes Präzisionsannahmekriterium für einen Variationskoeffizienten für einen Assay ist, wobei die Parameter a und b mittels Durchführen einer Vielzahl von LC-MS-Messungen an der Probe bestimmt werden, wobei für jede Messung die Information über das Analytsignal bestimmt wird, wobei das Verfahren unter Verwendung der Verarbeitungsvorrichtung (114) das Bestimmen eines Median- oder Mittelwertes der Information über das Analytsignal und ihres CV(aqn) und das Berechnen der Parameter a und b durch Verwenden mindestens einer Regressionsanpassung gemäß

$$CV_{aqn} = a + b \times \frac{1}{Peakfläche_{aqn}} \quad oder \quad CV_{aqn} = a + b \times \frac{1}{\sqrt{Peakfläche_{aqn}}}$$

umfasst, wobei CV(aqn) der Variationskoeffizient des Analytquantifizierers ist;

- wobei die Verarbeitungsvorrichtung (114) ferner dafür ausgebildet ist, die Information über das Signal eines internen Standards mit dem Überwachungsparameter zu vergleichen, wobei die Verarbeitungsvorrichtung (114) dafür ausgebildet ist, die LC-MS-Messung als die Qualitätsprüfung erfüllt, wenn die Information über das Signal eines internen Standards größer als der oder gleich dem Überwachungsparameter ist, oder andernfalls als fehlgeschlagen zu markieren.

**11.** System (110) nach dem vorstehenden Anspruch, wobei das System (110) dafür ausgebildet ist, das Verfahren nach einem der Ansprüche, die sich auf ein Verfahren beziehen, auszuführen.

## Revendications

**1.** Procédé mis en œuvre par ordinateur de contrôle de qualité d'au moins une mesure de chromatographie liquide-spectrométrie de masse (LC-MS) sur un échantillon comprenant un analyte d'intérêt et une quantité définie d'au moins un étalon interne, dans lequel le procédé comprend les étapes suivantes

a) (120) détermination d'une information (*Aire du pic*$_{aqn}$) au sujet d'un signal d'analyte et d'une information (*Aire du pic*$_{iqn}$) au sujet d'un signal d'étalon interne de la mesure LC-MS, dans lequel qn désigne un quantificateur, aqn se rapporte à un quantificateur d'analyte et iqn se rapporte à un quantificateur d'étalon interne ;

b) (122) détermination d'au moins un paramètre de surveillance en utilisant l'information au sujet du signal d'analyte et l'information au sujet du signal d'étalon interne en utilisant au moins un dispositif de traitement (114), dans lequel le paramètre de surveillance comprend une limite minimale pour le signal d'étalon interne pour ledit signal d'analyte dudit échantillon, dans lequel le paramètre de surveillance est déterminé par

$$\frac{b^2 \times \left(Aire\ du\ pic_{aqn}\right)^2}{-a \times b \times \left(Aire\ du\ pic_{aqn}\right)^2 + \sqrt{-b^2 \times \left(Aire\ du\ pic_{aqn}\right)^2 \times \left(b + \left(a - CV_{psd}\right) \times Aire\ du\ pic_{aqn}\right) * \left(b + \left(a + CV_{psd}\right) \times Aire\ du\ pic_{aqn}\right)}}$$

dans lequel a et b sont des paramètres prédéterminés, dans lequel $CV_{psd}$ est un critère d'acceptation de précision prédéfini pour un coefficient de variation pour un dosage, dans lequel les paramètres a et b sont déterminés en réalisant une pluralité de mesures LC-MS sur l'échantillon, dans lequel pour chaque mesure l'information au sujet du signal d'analyte est déterminée, dans lequel le procédé comprend, en utilisant le dispositif de traitement (114), la détermination d'une médiane ou d'une moyenne de l'information au sujet du signal d'analyte et de son CV(aqn), et le calcul des paramètres a et b en utilisant au moins un ajustement de régression selon

$$CV_{aqn} = a + b \times \frac{1}{Aire\ du\ pic_{aqn}} \text{ ou } CV_{aqn} = a + b \times \frac{1}{\sqrt{Aire\ du\ pic_{aqn}}},$$

dans lequel CV(aqn) est le coefficient de variation du quantificateur d'analyte ;

c) (124) comparaison de l'information au sujet du signal d'étalon interne au paramètre de surveillance en utilisant le dispositif de traitement (114), dans lequel la mesure LC-MS est signalée en utilisant le dispositif de traitement (114) comme satisfaisant au contrôle de qualité dans le cas où l'information au sujet du signal d'étalon interne est supérieure ou égale au paramètre de surveillance ou comme ayant échoué dans le cas contraire.

2. Procédé selon la revendication précédente, dans lequel l'information au sujet du signal d'analyte est au moins une parmi une aire de pic du quantificateur d'analyte, une hauteur de pic du quantificateur d'analyte, une largeur de pic du quantificateur d'analyte ou un temps de rétention du quantificateur d'analyte, dans lequel l'information au sujet du signal d'étalon interne est au moins une parmi une aire de pic du quantificateur d'étalon interne, une hauteur de pic du quantificateur d'étalon interne, une largeur de pic du quantificateur d'étalon interne ou un temps de rétention du quantificateur d'étalon interne.

3. Procédé selon l'une quelconque des revendications précédentes, dans lequel le procédé comprend la prise en compte des discontinuités pour le paramètre de surveillance en utilisant au moins une règle de contrôle, dans lequel la règle de contrôle utilise une pluralité de critères, dans lequel les critères sont

i.

$$-a \times b \times \left(Aire\ du\ pic_{aqn}\right)^2 +$$
$$\sqrt{-b^2 \times \left(Aire\ du\ pic_{aqn}\right)^2 \times \left(b + \left(a - CV_{psd}\right) \times Aire\ du\ pic_{aqn}\right) \times \left(b + \left(a + CV_{psd}\right) \times Aire\ du\ pic_{aqn}\right)} \leq$$
$$0\ ;$$

ii.

$$Aire\ du\ pic_{aqn} \leq \frac{b}{\sqrt{(CV_{psd})^2 - a^2} - a}\ ;$$

iii.

$$\frac{CV_{psd}}{\sqrt{2}} > a\ ;$$

iv.

$$-b^2 \times (Aire\ du\ pic_{aqn})^2 \times (b + (a - CV_{psd}) \times Aire\ du\ pic_{aqn}) \times (b + (a + CV_{psd}) \times Aire\ du\ pic_{aqn}) < 0;$$

v.

$$Aire\ du\ pic_{iqn} = +\infty\ ;$$

dans lequel la règle de contrôle comprend

- la détermination que si l'équation iv est vraie, alors l'équation v est utilisée comme paramètre de surveillance, ou alors
- la détermination que si les équations ii et iii sont toutes deux vraies, alors l'équation v est utilisée comme paramètre de surveillance, ou alors
- la détermination que si l'équation i est vraie, alors l'équation v est utilisée comme paramètre de surveillance, ou alors
- l'utilisation du paramètre de surveillance selon la revendication 1 comme paramètre de surveillance.

4. Procédé selon l'une quelconque des revendications précédentes, dans lequel l'étape a) (120) comprend la réalisation d'au moins une mesure LC-MS sur l'échantillon.

5. Procédé selon la revendication précédente, dans lequel dans l'étape a) (120) au moins un dispositif de chromatographie liquide-spectrométrie de masse est utilisé.

6. Procédé selon l'une quelconque des revendications précédentes, dans lequel le procédé comprend l'ajout à l'échantillon de l'au moins un étalon interne.

7. Programme informatique comprenant des instructions qui, lorsque le programme est exécuté par un dispositif de traitement (114), amènent le dispositif de traitement (114) à réaliser le procédé selon l'une quelconque des revendications précédentes.

8. Support de stockage lisible par ordinateur comprenant des instructions qui, lorsque les instructions sont exécutées par le dispositif de traitement (114), amènent le dispositif de traitement (114) à réaliser le procédé selon l'une quelconque des revendications précédentes se référant à un procédé.

9. Support lisible par ordinateur non transitoire comprenant des instructions qui, lorsqu'elles sont exécutées par un ou plusieurs processeurs, amènent le ou les processeurs à réaliser le procédé selon l'une quelconque des revendications précédentes se référant à un procédé.

10. Système (110) comprenant

- au moins un dispositif de chromatographie liquide-spectrométrie de masse (112) configuré pour réaliser au moins une mesure de chromatographie liquide-spectrométrie de masse (LC-MS) sur un échantillon comprenant un analyte d'intérêt et une quantité définie d'un étalon interne ;
- au moins un dispositif de traitement (114) configuré pour obtenir et/ou récupérer une information *Aire du pic$_{aqn}$* au sujet d'un signal d'analyte et une information *Aire du pic$_{iqn}$* au sujet d'un signal d'étalon interne de la mesure LC-MS, dans lequel qn désigne un quantificateur, dans lequel le dispositif de traitement (114) est en outre configuré pour déterminer au moins un paramètre de surveillance en utilisant l'information au sujet du signal d'analyte et l'information au sujet du signal d'étalon interne, dans lequel le paramètre de surveillance comprend une limite minimale pour le signal d'étalon interne pour ledit signal d'analyte dudit échantillon, dans lequel le paramètre de surveillance est déterminé par

$$\frac{b^2 \times \left(Aire\ du\ pic_{aqn}\right)^2}{-a \times b \times \left(Aire\ du\ pic_{aqn}\right)^2 + \sqrt{-b^2 \times \left(Aire\ du\ pic_{aqn}\right)^2 \times \left(b + \left(a - CV_{psd}\right) \times Aire\ du\ pic_{aqn}\right) * \left(b + \left(a + CV_{psd}\right) \times Aire\ du\ pic_{aqn}\right)}},$$

dans lequel a et b sont des paramètres prédéterminés, dans lequel $CV_{psd}$ est un critère d'acceptation de précision prédéfini pour un coefficient de variation pour un dosage, dans lequel les paramètres a et b sont déterminés en réalisant une pluralité de mesures LC-MS sur l'échantillon, dans lequel pour chaque mesure l'information au sujet du signal d'analyte est déterminée, dans lequel le procédé comprend, en utilisant le dispositif de traitement (114), la détermination d'une médiane ou d'une moyenne de l'information au sujet du signal d'analyte et de son CV(aqn), et le calcul des paramètres a et b en utilisant au moins un ajustement de régression selon

$$CV_{aqn} = a + b \times \frac{1}{Aire\ du\ pic_{aqn}} \text{ ou } CV_{aqn} = a + b \times \frac{1}{\sqrt{Aire\ du\ pic_{aqn}}},$$

dans lequel CV(aqn) est le coefficient de variation du quantificateur d'analyte ;
- dans lequel le dispositif de traitement (114) est en outre configuré pour comparer l'information au sujet du signal d'étalon interne au paramètre de surveillance, dans lequel le dispositif de traitement (114) est configuré pour signaler la mesure LC-MS comme satisfaisant au contrôle de qualité dans le cas où l'information au sujet du signal d'étalon interne est supérieure ou égale au paramètre de surveillance ou comme ayant échoué dans le cas contraire.

11. Système (110) selon la revendication précédente, dans lequel le système (110) est configuré pour réaliser le procédé selon l'une quelconque des revendications se référant à un procédé.

Fig. 1

Fig. 2

CV(aqn) vs. areaAqn

Fig. 3 A

Min IStd value vs. areaAqn

Fig. 3 B

CV(area) vs. median(area)

Fig. 3 C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9606088 B2
- US 9465911 B2
- US 7451052 B2
- US 20110101215 A1
- DE 102020200915 A1
- EP 3425369 A1